# EUROPEAN PATENT SPECIFICATION

(11) **EP 3 175 141 B1**
(45) Date of publication and mention of the grant of the patent: **07.08.2019**
(21) Application number: 15730089.8
(22) Date of filing: 08.06.2015
(51) Int. Cl.: F16G 5/16

(54) **GENERALLY C-SHAPED TRANSVERSE MEMBER FOR A DRIVE BELT FOR A CONTINUOUSLY VARIABLE TRANSMISSION**
ALLGEMEIN C-FÖRMIGES TRANSVERSALES ELEMENT FÜR EINEN ANTRIEBSRIEMEN FÜR EIN STUFENLOSES GETRIEBE
ÉLÉMENT TRANSVERSAL GÉNÉRALEMENT EN FORME DE C POUR COURROIE D'ENTRAÎNEMENT DESTINÉE À UNE TRANSMISSION À VARIATION CONTINUE

(30) Priority: 06.06.2014 NL 1040837
(43) Date of publication of application: 07.06.2017
(73) Proprietor: Robert Bosch GmbH, 70442 Stuttgart (DE)
(72) Inventor: VAN DER MEER, Cornelis Johannes Maria, 5032 XG Tilburg (NL); BRANDSMA, Arjen, 5045 WN Tilburg (NL); VAN TREIJEN, Adrianus Antonius Jacobus Maria, 4811 VS Breda (NL)
(74) Representative: Plevier, Gabriël Anton Johan Maria
(86) International application number: PCT/EP2015/062740
(87) International publication number: WO 2015/185759

(56) References cited:
- EP-A1- 0 109 132
- EP-A1- 2 738 419
- JP-U- S6 271 443

## Description

The present disclosure relates to a drive belt for a continuously variable transmission with two pulleys for accommodating the drive belt between the, at least partly conical pulley sheaves thereof, in particular to a transverse member thereof. The known drive belt comprises an endless, i.e. ring-shaped carrier that is composed of at least one, but typically of a set of nested, flexible rings and a number of transverse members that together form an essentially contiguous row along the circumference of the endless carrier. Typically both the said flexible rings and the transverse members of the drive belt are made of metal, in particular steel.

The transverse members of the drive belt each define a cut-out or slot that opens towards an axial or lateral side of the drive belt and that extends in a direction generally towards the opposite axial side of the drive belt to beyond the (axial) centre of the transverse member, in which slot the endless carrier is located. The drive belt typically includes two types of these transverse members, whereof the slot opens towards mutually opposite sides of the drive belt. Furthermore, typically, these two types of transverse members are arranged in a mutually alternating pattern in the drive belt. Such a drive belt with effectively C-shaped transverse members is known from, for example, the European patent publication No. 0135237-A1.

The known transverse member includes a base part lying below i.e. radially inward from the slot, a top part lying above, i.e. radially outside the slot, and a middle part lying on the axially closed side of the slot and connecting the said bottom and top parts.

In the base part of the transverse members, on a front main surface thereof, a so-called tilting zone is provided. The tilting zone is an axially extending transition between a radially outer section of the transverse member of essentially constant thickness, i.e. dimension in the said circumferential direction, and an radially inner section thereof that, at least effectively, tapers in radial inward direction. Such tilting zone and tapered inner section of the transverse member allow adjacent transverse members to mutually tilt in a curved trajectory part of the drive belt in the transmission, while these adjacent transverse members remain in physical contact through, at least, an axially oriented line of contact located in the tilting zone. It is noted that a ratio between respective radial positions of the tilting edge at the two transmission pulleys determines the (rotational) speed ratio between the pulleys and (thus) of the transmission.

Further on the said front main surface, in the top part of the transverse member, a projection is provided that protrudes from the front main surface essentially in the said circumferential direction. In the drive belt the projection is inserted in a recess provided in an opposite, i.e. rear main surface of an adjacent transverse member in the drive belt. Such projection and recess serve to prevent, or at least limit, a relative movement between adjacent transverse members in the row of transverse members of the drive belt, at least in radial direction, but typically also in axial direction.

On either axial side of the base part thereof, the transverse member is provided with contact surfaces for frictionally engaging a pulley sheave of the transmission pulleys. These pulley contact surfaces are mutually oriented at an angle, denoted the belt angle, that matches, at least by approximation, an angle defined by and between the conical pulley sheaves of the pulleys, which latter angle is denoted the pulley angle.

Typically, the pulley contact surfaces either are corrugated or are provided with a substantial surface roughness, such that only the peaks of the corrugation or roughness profile of these contact surfaces arrive in actual contact with the pulley sheaves. This particular feature provides that cooling oil that is applied in the known transmission can be accommodated in the valleys of the said corrugation or roughness profile, thus improving the friction between the drive belt and the transmission pulleys.

During operation in the transmission, the transverse members of the drive belt that are located between the pulley sheaves of a driving pulley of the transmission are driven in the direction of rotation thereof by friction forces being exerted by these pulley sheaves on the pulley contact surfaces of these transverse members. These latter, driven transverse members push preceding transverse members along the circumference of the endless carrier of the drive belt and, ultimately, rotationally drive the driven pulley of the transmission, again by friction. In order to generate such friction (force) between the transverse members and the pulley sheaves of the transmission pulleys to build up, the pulley sheaves of a pulley are forced towards one another in axial direction, whereby these exert mutually opposed pinching force on the transverse members in the axial direction thereof.

In the design thereof according to EP-0135237-A1, the slot is bound in radial outward direction by a convexly curved underside of the top part. Thus, in this known design, a contact between the top part of the transverse member and the endless carrier in radial outward direction thereof occurs primarily at the axial side(s) of the endless carrier. As a result, the (contact) stress associated with such contact disadvantageously concentrates at the said axial side(s) of the endless carrier.

Such (contact) stress can be reduced by increasing an area of the contact between the top part of the transverse member and the endless carrier in radial outward direction. For example for this purpose, the underside of the top part can be designed as a flat surface that is essentially oriented in parallel with the topside of the base part that bounds the slot in radial inward direction, which particular design is known from EP 2 738 419 A1. Actually, also in this particular design a contact between the top part of the transverse member and the endless carrier in radial outward direction thereof is disadvantageously concentrated. Namely, either such contact is concentrated at the (axial) centre line of the endless carrier, if the radial outside of the endless carrier is curved slightly convexly by a corresponding convex curvature being applied to the topside of the base part that bounds the slot in radial inward direction, or at an axial side thereof, if the transverse member deforms during operation, as mentioned hereinafter.

According to the present disclosure both the aforementioned known designs of the transverse member do not take into account the stress of the endless carrier, at least not optimally. More in particular, it has been established that the stress occurring in the endless carrier, due to the bending thereof during operation of the drive belt, is highest at the axial centre thereof when the endless carrier is bent in circumference direction around a transmission pulley and is highest at the axial sides thereof when the endless carrier is straightened in-between the transmission pulleys.

According to the present disclosure, the contact between the top part of the transverse member and the endless carrier in radial outward direction thereof occurs somewhere in-between the axial centre and an axial sides of the endless carrier. In the drive belt this feature is achieved by providing a most radial inward extent of the underside of the top part of the transverse element opposite the endless carrier in between a respective axial side and the axial centre thereof at a location between one eighths and three eighths of the (axial) width of the endless carrier from the respective axial side, preferably at one quarter of such width from the respective axial side. Furthermore, for favourably minimising the size and weight of the transverse member, such most radial inward extent of the top part is provided on the axial side of the endless carrier nearest the middle part thereof.

Additionally, according to the present disclosure, it can be desirable to even intensify the said contact between the top part of the transverse member and the endless carrier, in order to clamp the endless carrier between the base and top parts of the transverse member, i.e. to increase the friction there between. As a result a movement or slip of the endless carrier relative to the transverse members can be reduced, which typically has a favourable effect on the (power transmission) efficiency of the transmission as a whole. It was found that, in order to intensify the said contact, it can be relied on a deformation of the transverse member under the influence of the pulley pinching force.

In particular, the desired deformation occurs if the contact surfaces of the transverse member extend from the base part into the middle part thereof. Then this middle part receives (a part of) the axially directed pulley pinching force, as a result whereof it deforms and, in particular rotates slightly relative to the base part, while taking the top part along with it. Provided that such rotation of the middle and top parts of the transverse member, relative to the base part thereof, is large enough, the top part will increasingly engage the endless carrier.

Obviously, the larger the separation in radial direction between the top part of the transverse member and the endless carrier without any pulley pinching force being applied, and the more the endless carrier is required to be clamped between the top and base parts of the transverse member, the higher such deformation and rotation of the middle part are required to be. The deformation and rotation of the middle part under the influence of the pulley pinching force can be increased by increasing the extent of the contact surfaces into the middle part and/or by reducing an (axial) thickness of the middle part and vice-versa. In a preferred embodiment of the transverse member, the extent of contact surfaces into the middle part amounts to 15% to 30% of the (axial) thickness of the middle part and, preferably, amounts to approximately one fifth of this latter thickness.

The invention will now be explained by way of example on the basis of the description below with reference to the drawing, in which:
- figure 1 is a simplified and schematic side elevation of a transmission with two pulleys and a drive belt;
- figure 2 illustrates the known drive belt with generally C-shaped transverse members in a cross-section thereof facing in its circumference direction;
- figure 3 represented a cross-section of the known drive belt of figure 2 facing in the axial direction thereof;
- figure 4 illustrates another, known embodiment drive belt in cross-section;
- figure 5 represents the novel drive belt with generally C-shaped transverse members in accordance with the present disclosure; and
- figure 6 illustrates a second aspect of the present disclosure by way of a front elevation of one of the transverse members of the novel drive belt represented in figure 5.

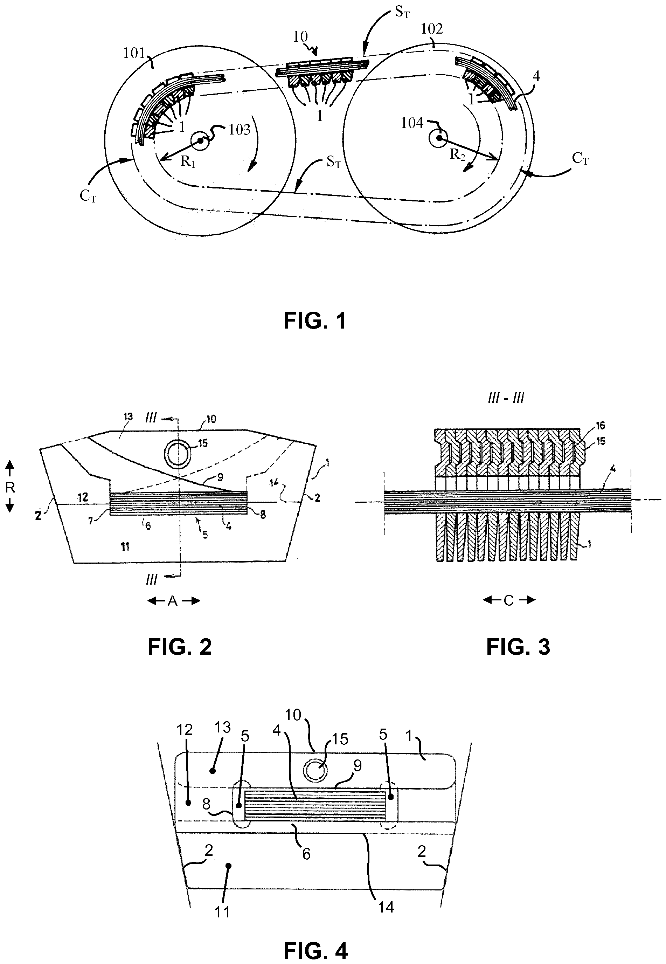

Figure 1 schematically shows the central parts of a continuously variable transmission for use in a driveline of, for example, passenger motor vehicles. This transmission is well-known per se and comprises at least a first variable pulley 101 and a second variable pulley 102. In the driveline, the first pulley 101 is coupled to and driven by an engine and the second pulley 102 is typically coupled to driven wheels of the motor vehicle via a number of gears.

Both transmission pulleys 101, 102 comprise a first conical pulley sheave that is fixed to a pulley shaft 103, 104 of the respective pulley 101, 102 and a second conical pulley sheave that is axially displaceable relative to the respective pulley shaft 103, 104 and that is fixed thereto only in rotational direction. A drive belt 10 of the transmission is wrapped around the pulleys 101, 102, while being accommodated between the pulley sheaves thereof. As appears from figure 1, the trajectory of the drive belt 10 in the transmission includes two straight sections S_{T} and two curved sections C_{T} where the drive belt 10 is curved around a respective one of the two transmission pulleys 101, 102.

During operation of the transmission, the drive belt 10 is pinched by and between the pulley sheaves of both pulleys 101, 102 and thus provides a rotational connection there between by means of friction. To this end, electronically controllable and hydraulically acting movement means that act on the respective moveable pulley sheave of each pulley 101, 102 are provided in the transmission (not shown). In addition to exerting a pinching force on the drive belt 10, these movement means also control respective radial positions R1 and R2 of the drive belt at the pulleys 101, 102 and, hence, the speed ratio that is provided by the transmission between the pulley shafts 103, 104 thereof.

The known drive belt 10 is composed of an endless carrier 4 and a plurality of transverse members 1 that are mounted on the endless carrier 4 along the circumference thereof in an, at least essentially, contiguous row. In the drive belt 10 the transverse members 1 are movable along the circumference of the endless carrier 4, which endless carrier 4 is typically composed of a number of flexible metal rings or bands, which metal bands are stacked one around one another, i.e. are mutually nested.

In figures 2 and 3 the known drive belt 10 is illustrated in one of many known embodiments thereof. In figure 2 the drive belt 10 is shown in a cross-section thereof facing in circumference direction C and in figure 3 in a cross-section thereof facing in axial direction A, which latter cross-section corresponds to the line III-III indicated in figure 2.

The transverse members 1 of the known drive belt 10 define a cut-out or slot 5 that opens towards a first axial side of the drive belt 10, i.e. the left side in figure 2, and that extends in a direction generally towards the opposite, right axial side of the drive belt 10 to beyond the (axial) centre of the transverse member 1, in which slot 5 a small circumferential section of the endless carrier 4 is located per transverse member 1. The transverse members 1 of this drive belt 10 are thus shaped roughly similar to the letter "C", i.e. are generally C-shaped. As indicated by the dashed lines in figure 2, the drive belt 10 also includes transverse members 10, whereof the slot 5 opens towards the right. Thus, in the drive belt 10, the endless carrier 4 is constrained by the transverse members 1 both in the axial direction A and in radial direction R.

The known transverse members 1 include a base part 11 lying below, i.e. radially inward from the slot 5, a top part 13 lying radially outward from the slot 5, and a middle part 12 lying on the axially closed side of the slot 5 and interconnecting the said bottom part 11 and top part 13 of the transverse member 1. In axial direction the slot 5 is bound by side faces 7 and 8 of the middle part 12, in radial inward direction the slot 5 is bound by a support surface 6 of the base part 11 and in radial outward direction the slot 5 is bound by a convexly curved underside 9 of the top part 13.

A so-called tilting zone 14 is provided in a main surface of the transverse member 1. This tilting zone 14 represents an axially extending transition between a radially outer section of the transverse member 1 of essentially constant thickness and a radially inner section thereof that is tapered in radial inward direction. Typically, the tilting zone 14 is smoothly, convexly curved. When adjacent transverse members 1 are tilted relative to one another in the curved section C_{T} of the drive belt 10, these (can) remain in contact at the location of the tilting zone 14.

In the top part 13 of the transverse member 1, a projection 15 is provided that protrudes from a front main surface of the transverse member 1 in the said circumference direction C. In the drive belt 10 the projection is inserted in a recess 16 provided in an opposite, i.e. rear main surface of an adjacent transverse member 1 in the drive belt 10. Such projection 15 and recess 16 serve to prevent, or at least limit, a relative movement between adjacent transverse members 1 in the row of transverse members 1 of the drive belt 10, at least in radial direction R, but typically also in axial direction A.

On either axial side thereof, the transverse member 1 is provided with a contact surface 2 for frictionally engaging a pulley sheave of the transmission pulleys 101, 102. These pulley contact surfaces 2 are mutually oriented at an angle that corresponds to an angle between the pulley sheaves of the pulleys 101, 102.

In this known type of drive belt 10, the top parts 13 of the transverse members 1, in particular the said undersides 9 thereof, engage the radial outside of the endless carrier 4 at its axial sides.

In figure 4 the drive belt 10 is illustrated in a second known embodiment thereof. In this second embodiment of the known drive belt 10, the extent of the slots 5 of the transverse members 1 is aligned with the axial direction A. Thus, in this second embodiment of the drive belt 10 the endless carrier 4 is bound by the transverse member 1, i.e. by the side face 8 of the middle part 12 thereof, towards one axial side only. Still, in the drive belt 10, the endless carrier 4 is bound to both axial sides by these side faces 8 of two subsequent transverse members 1 that have a mutually mirrored shape relative to the axial middle thereof.

In this second, known embodiment of the drive belt 10, the top parts 13 of the transverse members 1, in particular the said undersides 9 thereof, contact the radial outside of the endless carrier 4 along its entire (axial) width. In fact, in reality in this known drive belt design, such contact initially and primarily occurs at the axial middle of the endless carrier 4 because of the slight width-wise convex curvature thereof due to the convex curvature of the support surface 6 of the base part 11 that bounds the slot 5 in radial inward direction (not shown).

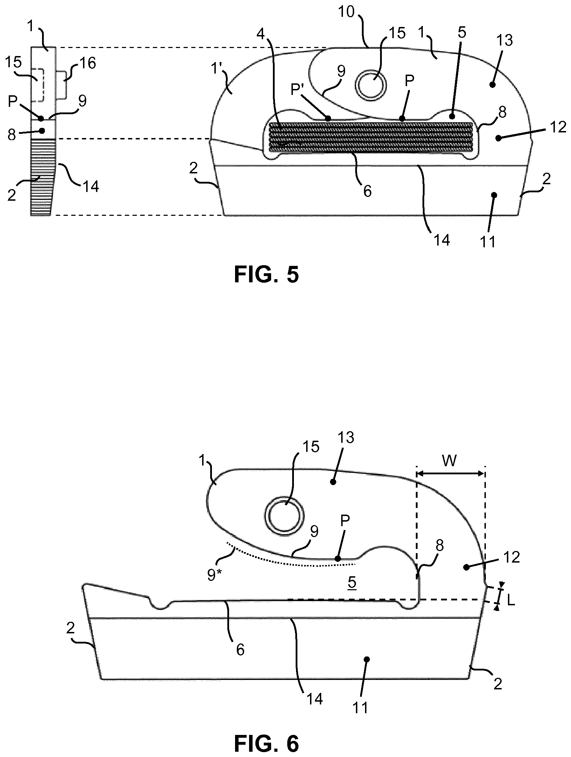

In figure 5 a novel design of the drive belt 10 is presented in accordance with the present disclosure. This novel drive belt 10 distinguishes itself from the known art by the shape of the head part 13 of the transverse members 1, in particular of the underside 9 thereof. Also included in this figure 5 is a side elevation of the transverse member 1 on its own.

As indicated in figure 5 and similar to the known drive belts 10, also the novel drive belt 10 includes two types transverse members 1, 1' that are of a mutually mirrored shape relative to the axial middle thereof and that are alternatingly incorporated in the drive belt 10, at least preferably. However, in the novel drive belt 10 it is realised that, in contrast to the known drive belts 10, the top part 13 of the transverse element 1 engages, i.e. arrive in contact with the endless carrier 10 away from both its axial middle and its axial sides. Hereby, an additional stress generated in the endless carrier 4 by such contact does not add to the highest stress level in the endless carrier 4 due to the bending thereof during operation of the drive belt 10, at least not directly and thus to a lesser extent than in the known drive belts 10. As a result the durability and/or the load-carrying-capacity of the drive belt 10 improves.

In the novel drive belt 10 the underside 9 of the head part 13 of the transverse members 1 is provided with a lowest, most radially inward position P thereof, which position P on the underside thus is nearest the support surface 6, is separated from, i.e. is located in axial direction away from, both the side face 8 of the middle part 12 and the axial middle of the support surface 6 of the base part 11. Preferably, such lowest position P of the underside 9 of the head part 13 is not confined to a single point, but is provided in the form of a straight line portion of the said underside 9 in order to limit the said contact stress by distributing it over a certain surface area. Additionally, such lowest position P is preferably located essentially halfway between the side face 8 of the middle part 12 and the axial middle of the support surface 6 of the base part 11.

Thus, according to the present disclosure, the underside (9) of the top part (13) of the transverse segment (1) facing the endless carrier (4) is shaped to initially contact the endless carrier (4) away from both the (axial) sides and the (axial) middle of the endless carrier (4) upon rotation or translation of the transverse segment (1) relative to the carrier (4)

In figure 6, the transverse member 1 of the novel drive belt 10 is depicted once again in a front elevation thereof to illustrate a second aspect of the present disclosure. Namely, it can be desirable to increase a friction force between the head part 13 of the transverse member 1 and the endless carrier 4. According to the present disclosure this can be achieved by extending the contact surfaces 2 from the base part 11 into the middle part 12, as indicated in figure 6. As a result thereof, the middle part 12 will deform under the influence of the pinching forces exerted by the pulleys 101, 102 on the contact surfaces 2, which deformation causes the head part 8 and hence the said lowest position P of the underside 9 thereof to be displaced radially inwards, as indicated in figure 6 by the dotted line 9* (however, in an exaggerated manner). In particular in this respect, the extent L of contact surfaces 2 into the middle part 12 of the transverse member 1 amounts to between 15% and 30% of an (axial) width W of that middle part 12, at least for the case that the transverse member 1 is made of metal, in particular carbon steel.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Drive belt (10) destined for use in a continuously variable transmission, such as is applied in a drive train of a motor vehicle for passenger transport, with at least one endless carrier (4) and with a number of transverse members (1), which transverse members (1) each define a slot (5) that in height direction is delimited on one side by a support surface (6) of the bottom part (11) of the transverse member (1) and on the opposite side by a convexly curved underside (9) of a top part (13) of the transverse member (1), which slot (5) is furthermore delimited in width direction by a middle part (12) of the transverse member (1) that interconnects the bottom part (11) and the top part (13) thereof, and in which slot (5) is circumference part of the endless carrier (4) is located that is supported by the support surface (6) of the bottom part (11) of the transverse member (1), which support surface (6) extends from the middle part (12) of the transverse element (1) predominantly in width direction, **characterised in that**, a position (P) on the convexly curved underside (9) of the top part (13) lying closest to the endless carrier (4) is located in the said width direction opposite a position on that endless carrier (4) in-between the middle and one of either lateral side thereof, at a distance of between one to three eighths of a total dimension of the support surface (6) from the respective one lateral side of the support surface (6).

2. The drive belt (10) according to claim 1, **characterised in that**, the position (P) on the underside (9) of the top part (13) lying closest to the endless carrier (4) is located opposite a position on that endless carrier (4) at one quarter of a total dimension of the support surface (6) in the said width direction.

3. The drive belt (10) according to claim 1 or 2, **characterised in that**, the position (P) on the underside (9) of the top part (13) lying closest to the endless carrier (4) is located opposite a position on that endless carrier (4) that lies closest to the middle part (12) relative to the middle thereof.

4. The drive belt (10) according to a preceding claim, **characterised in that**, the transverse member (1) on either side of the bottom part (11) thereof is provided with a contact surface (2), whereof at least one contact surface (2) extends into the middle part (12) of the transverse member (1) over a distance (L) in the range from 15% to 30% of a total dimension of the middle part (12) in the said width direction.

5. The drive belt (10) according to claim 4, **characterised in that**, the said distance (L) amounts to one fifth of the total dimension of the middle part in the said width direction.

## Patentansprüche

1. Antriebsriemen (10), der zu Verwendung in einem stufenlos verstellbaren Getriebe vorgesehen ist, wie es in einem Antriebsstrang eines Motorfahrzeugs für den Personenverkehr verwendet wird, mit zumindest einem Endlosträger (4) und mit einer Anzahl von Querelementen (1), wobei die Querelemente (1) jedes einen Schlitz (5) definieren, der in Höhenrichtung auf einer Seite durch eine Auflagefläche (6) des unteren Teils (11) des Querelements (1) und auf der gegenüberliegenden Seite durch eine konvex gekrümmte Unterseite (9) eines oberen Teils (13) des Querelements (1) begrenzt ist, wobei der Schlitz (5) ferner in Breitenrichtung durch einen Mittelteil (12) des Querelements (1) begrenzt ist, der den unteren Teil (11) und den oberen Teil (13) desselben verbindet, und wobei sich in dem Schlitz (5) ein Umfangsteil des Endlosträgers (4) befindet, der durch die Auflagefläche (6) des unteren Teils (11) des Querelements (1) getragen wird, wobei sich die Auflagefläche (6) vom Mittelteil (12) des Querelements (1) überwiegend in Breitenrichtung erstreckt, **dadurch gekennzeichnet, dass** sich eine Position (P) der konvex gekrümmten Unterseite (9) des oberen Teils (13), die dem Endlosträger (4) am nächsten liegt, in der Breitenrichtung gegenüber einer Position an diesem Endlosträger (4) zwischen der Mitte und einer beider lateralen Seiten desselben in einem Abstand von einem bis zu drei Achteln einer Gesamtabmessung der Auflagefläche (6) zur jeweiligen lateralen Seite der Auflagefläche (6) befindet.

2. Antriebsriemen (10) nach Anspruch 1, **dadurch gekennzeichnet, dass** sich die Position (P) an der Unterseite (9) des oberen Teils (13), die dem Endlosträger (4) am nächsten liegt, gegenüber einer Position an diesem Endlosträger (4) bei einem Viertel einer Gesamtabmessung einer Gesamtabmessung der Auflagefläche (6) in der Breitenrichtung befindet.

3. Antriebsriemen (10) nach Anspruch 1 oder 2, **dadurch gekennzeichnet, dass** sich die Position (P) an der Unterseite (9) des oberen Teils (13), die dem Endlosträger (4) am nächsten liegt, gegenüber einer Position an diesem Endlosträger (4), die dem Mittelteil (12) relativ zu dessen Mitte am nächsten liegt, befindet.

4. Antriebsriemen (10) nach einem vorangehenden Anspruch, **dadurch gekennzeichnet, dass** das Querelement (1) auf jeder Seite des unteren Teils (11) desselben mit einer Kontaktfläche (2) bereitgestellt ist, wovon sich zumindest eine Kontaktfläche (2) in den Mittelteil (12) des Querelements (1) über einen Abstand (L) im Bereich von 15 % bis 30 % einer Gesamtabmessung des Mittelteils (12) in der Breitenrichtung erstreckt.

5. Antriebsriemen (10) nach Anspruch 4, **dadurch gekennzeichnet, dass** der Abstand (L) bis zu einem Fünftel der Gesamtabmessung des Mittelteils in der Breitenrichtung beträgt.

## Revendications

1. Courroie d'entraînement (10) destinée à être utilisée dans une transmission à variation continue, de façon à être appliquée dans une transmission d'un véhicule à moteur pour le transport de passagers, comportant au moins un support sans fin (4) et un certain nombre d'éléments transversaux (1), lesquels éléments transversaux (1) définissent chacun une fente (5) qui dans la direction de hauteur est délimitée sur un côté par une surface de support (6) de la partie inférieure (11) de l'élément transversal (1) et sur le côté opposé par une sous-face convexe courbe (9) d'une partie supérieure (13) de l'élément transversal (1), laquelle fente (5) est en outre délimitée dans la direction de largeur par une partie intermédiaire (12) de l'élément transversal (1) qui raccorde la partie inférieure (11) et la partie supérieure (13) de celui-ci, et fente (5) dans laquelle une partie de circonférence du support sans fin (4) est située qui est supportée par la surface de support (6) de la partie inférieure (11) de l'élément transversal (1), laquelle surface de support (6) s'étend à partir de la partie intermédiaire (12) de l'élément transversal (1) principalement dans la direction de largeur, **caractérisée en ce qu'**une position (P) de la sous-face convexe courbe (9) de la partie supérieure (13) la plus proche du support sans fin (4) est située dans ladite direction de largeur à l'opposé d'une position sur le support sans fin (4) entre le milieu et l'un ou l'autre de ses côtés latéraux, à une distance comprise entre un et trois huitièmes d'une dimension totale de la surface de support (6) à partir du côté latéral respectif de la surface de support (6).

2. Courroie d'entraînement (10) selon la revendication 1, **caractérisée en ce que** la position (P) sur la sous-face (9) de la partie supérieure (13) la plus proche du support sans fin (4) est située à l'opposé d'une position sur le support sans fin (4) à un quart de la dimension totale de la surface de support (6) dans ladite direction de largeur.

3. Courroie d'entraînement (10) selon la revendication 1 ou 2, **caractérisée en ce que** la position (P) sur la sous-face (9) de la partie supérieure (13) la plus proche du support sans fin (4) est située à l'opposé d'une position sur le support sans fin (4) qui est la plus proche de la partie intermédiaire (12) par rapport à son milieu.

4. Courroie d'entraînement (10) selon l'une quelconque des revendications précédentes, **caractérisée en ce que** l'élément transversal (1) sur chaque côté de la partie inférieure (11) de celui-ci est muni d'une surface de contact (2), dont au moins une surface de contact (2) s'étend dans la partie intermédiaire (12) de l'élément transversal (1) sur une distance (L) dans la plage comprise entre 15 % et 30 % d'une dimension totale de la partie intermédiaire (12) dans ladite direction de largeur.

5. Courroie d'entraînement (10) selon la revendication 4, **caractérisée en ce que** ladite distance (L) est égale à un cinquième de la dimension totale de la partie intermédiaire dans ladite direction de largeur.
